# EUROPEAN PATENT APPLICATION

(11) **EP 4 181 581 A1**
(43) Date of publication of application: **17.05.2023**
(21) Application number: 21851102.0
(22) Date of filing: 30.07.2021
(51) Int. Cl.: H04W 52/02, H04L 27/26

(54) **SIGNAL TRANSMISSION METHOD AND RELATED DEVICE**

(30) Priority: 31.07.2020 CN 202010765245
(71) Applicant: Huawei Technologies Co., Ltd., Shenzhen, Guangdong 518129 (CN)
(72) Inventor: YANG, Qi, Shenzhen, Guangdong 518129 (CN); ZHU, Wei, Shenzhen, Guangdong 518129 (CN); GONG, Zhengwei, Shenzhen, Guangdong 518129 (CN)
(74) Representative: Pfenning, Meinig & Partner mbB
(86) International application number: PCT/CN2021/109575
(87) International publication number: WO 2022/022679

(57) **Abstract**

Embodiments of this application disclose a signal transmission method and a related device thereof, to shut down a CRS in a subframe while communication performance of a terminal device is ensured, so as to further reduce power consumption of a network device. The method in this application includes: obtaining N parameters of a target cell, where the parameters indicate a real-time status of the target cell, and N is an integer greater than or equal to 1; and shutting down at least one first orthogonal frequency division multiplexing OFDM symbol in a first subframe of the target cell after determining that at least one of the N parameters is less than or equal to a corresponding threshold and determining that each terminal device in connected mode in the target cell is in a discontinuous reception DRX sleep period or that no terminal in connected mode exists in the target cell, where the first OFDM symbol carries a cell specific reference signal CRS corresponding to a first port and/or a second port.

## Description

This application claims priority to Chinese Patent Application No. 202010765245.9, filed with the China National Intellectual Property Administration on July 31, 2020 and entitled "SIGNAL TRANSMISSION METHOD AND RELATED DEVICE THEREOF", which is incorporated herein by reference in its entirety.

### TECHNICAL FIELD

This application relates to the field of communication technologies, and in particular, to a signal transmission method and a related device thereof.

### BACKGROUND

Symbol shutdown is an energy-saving technology in a long term evolution (long term evolution, LTE) system. In the symbol shutdown technology, when normal transmission of signals such as a cell specific reference signal (cell specific reference signal, CRS) is ensured, a power amplifier of a network device may be shut down on orthogonal frequency division multiplexing (orthogonal frequency division multiplexing, OFDM) symbols on which no data transmission is performed, to reduce power consumption of the network device.

During symbol shutdown, to ensure normal communication between a terminal device and the network device, the network device needs to send a CRS on at least four OFDM symbols in one subframe. On this basis, how to further reduce the power consumption of the network device without affecting communication performance (for example, performance of the terminal device for quickly responding to a service requirement or throughput performance of the terminal device) of the terminal device is a problem to be resolved urgently.

### SUMMARY

Embodiments of this application provide a signal transmission method and a related device thereof, to shut down a CRS in a subframe while communication performance of a terminal device is ensured, so as to reduce power consumption of a network device.

A first aspect of embodiments of this application provides a signal transmission method. The method may be performed by a network device, or may be performed by a component (for example, a processor, a chip, or a chip system) of a network device. For example, the method is performed by the network device. The method includes: The network device first obtains N parameters of a target cell, where the N parameters indicate a real-time status of the target cell, and N is an integer greater than or equal to 1. The network device then shuts down at least one first OFDM symbol in a first subframe of the target cell after determining that at least one of the N parameters is less than or equal to a corresponding threshold and determining that each terminal device in connected mode in the target cell is in a discontinuous reception (discontinuous reception, DRX) sleep period or that no terminal in connected mode exists in the target cell, where the first OFDM symbol carries a CRS corresponding to a first port and/or a second port.

Specifically, to monitor a real-time status of a target cell, the network device may first obtain N parameters of the target cell, where N is an integer greater than or equal to 1. Each of the N parameters may indicate the real-time status of the target cell, for example, a load status and/or a performance status of the target cell.

Then, the network device may determine whether at least one of the N parameters is less than or equal to a corresponding threshold. If determining that the at least one of the N parameters is less than or equal to the corresponding threshold, the network device then determines that each terminal device in connected mode in the target cell is in a DRX sleep period or that no terminal in connected mode exists in the target cell.

Finally, if the network device determines that each terminal device in connected mode in the target cell is in the DRX sleep period or that no terminal in connected mode exists in the target cell, the network device may send fewer CRSs. Specifically, the network device shuts down at least one first OFDM symbol in a first subframe of the target cell, where the first OFDM symbol carries a CRS corresponding to a first port and/or a second port.

It can be learned from the foregoing method that the network device shuts down the at least one first OFDM symbol in the first subframe after determining that the at least one of the N parameters is less than or equal to the corresponding threshold, and determining that each terminal device in connected mode in the target cell is in the DRX sleep period or no terminal in connected mode exists in the target cell, where the first OFDM symbol carries the CRS corresponding to the first port and/or the second port. Because each terminal device in connected mode in the target cell is in the DRX sleep period or no terminal in connected mode exists in the target cell, the network device shuts down the CRS on the at least one OFDM symbol in the first subframe without affecting the communication performance of the terminal device. Therefore, compared with the conventional symbol shutdown technology, in embodiments of this application, more OFDM symbols can be shut down while the communication performance of the terminal device is ensured, to further reduce the power consumption of the network device.

In a possible implementation, for example, the first subframe has M first OFDM symbols, and M is an integer greater than or equal to 1. To implement energy saving, the network device may selectively shut down a plurality of first OFDM symbols in the first subframe. Specifically, a quantity of first OFDM symbols that are shut down is 1, 2, ..., M-1, or M, thereby improving flexibility and selectability of this solution.

In a possible implementation, both the CRS corresponding to the first port and the CRS corresponding to the second port indicate the terminal device to measure reference signal received power (reference signal receiving power, RSRP) of the target cell.

In a possible implementation, that the network device determines that each terminal device in connected mode in a target cell is in a DRX sleep period includes: The network device determines that each terminal device in connected mode in the target cell is in the DRX sleep period, where a DRX cycle of each terminal device in connected mode has same start time and same end time. It can be learned from the foregoing implementations that the network device may align DRX cycles of all the terminal devices in connected mode in the target cell in advance, and then obtain a status of each terminal device in connected mode in real time, to determine whether all the terminal devices in connected mode in the target cell are in the DRX sleep periods.

In a possible implementation, that the network device determines that each terminal device in connected mode in the target cell is in a DRX sleep period or no terminal in connected mode exists in the target cell includes: The network device determines that each terminal device in connected mode in the target cell is in the DRX sleep period or no terminal in connected mode exists in the target cell, where start time or end time of a DRX cycle of each terminal in connected mode is not necessarily the same. The network device may still obtain a status of each terminal device in connected mode in real time, to determine whether all the terminal devices in connected mode in the target cell are in the DRX sleep periods.

In a possible implementation, if at least three ports are configured for the target cell, that the network device shuts down at least one first OFDM symbol in a first subframe of the target cell includes: The network device shuts down the at least one first OFDM symbol and each second OFDM symbol in the first subframe of the target cell, where each second OFDM symbol carries a CRS corresponding to a port other than the first port and the second port. It can be learned from the foregoing implementations that when the at least three ports are configured for the target cell, the network device may send fewer CRSs corresponding to the first port and the second port in the first subframe, and does not send the CRS corresponding to the port other than the first port and the second port, to shut down CRSs on a plurality of OFDM symbols, thereby reducing the power consumption of the network device.

In a possible implementation, if the target cell is a frequency division duplex (frequency division duplexing, FDD)-based cell, the network device may select a subframe whose sequence number is 1, 2, 3, 6, 7, or 8 and that actually does not carry a system information block (system information block, SIB) message and/or a radio access response (radio access response, RAR) message as the first subframe of the target cell.

In a possible implementation, if the target cell is a time division duplex (time division duplex, TDD)-based cell, the network device may select a subframe whose sequence number is 3, 4, 7, 8, or 9 and that actually does not carry a SIB message and/or an RAR message as the first subframe of the target cell.

In a possible implementation, if at least three ports are configured for the target cell, the method further includes: The network device shuts down each second OFDM symbol and skips shutting down the first OFDM symbol in a second subframe of the target cell after determining that the at least one parameter is less than or equal to the corresponding threshold and determining that each terminal device in connected mode in the target cell is in the discontinuous reception DRX sleep period or that no terminal in connected mode exists in the target cell. It can be learned from the foregoing implementations that when the at least three ports are configured for the target cell, the network device may normally send the CRSs corresponding to the first port and the second port in the second subframe, and does not send the CRS corresponding to the port other than the first port and the second port, to further reduce the power consumption of the network device.

In a possible implementation, if the target cell is an FDD-based cell, the network device may select a non-paging occasion (paging occasion, PO) subframe whose sequence number is 4, 5, or 9 and that does not carry a SIB message and/or an RAR message as the second subframe of the target cell, and determine that a second quantity is 4.

In a possible implementation, if the target cell is a TDD-based cell, the network device may select a non-PO subframe whose sequence number is 1, 5, or 6 and that does not carry a SIB message and/or an RAR message as the second subframe of the target cell, and determine that the second quantity is 4, 3, 2, or 1.

In a possible implementation, the method further includes: The network device sends notification information to a terminal device located in a neighboring cell of the target cell, where the notification information indicates the terminal device in the neighboring cell to receive the CRS corresponding to the first port and/or the second port in a third subframe of the target cell. If the target cell is the FDD-based cell, a sequence number of the third subframe is 0, 4, 5, or 9. If the target cell is the TDD-based cell, the sequence number of the third subframe is 0, 1, 5, or 6. It can be learned from the foregoing implementations that the network device may notify the terminal device in the neighboring cell to receive the CRS corresponding to the first port and/or the second port in the third subframe of the target cell, to ensure that the terminal device in the neighboring cell can normally measure the RSRP of the target cell.

In a possible implementation, the first port is a protocol port (port) 0, and the second port is port1.

In a possible implementation, the N parameters include: one or more of parameters such as uplink service load, downlink service load, a quantity of terminal devices, an information transmission rate, and an information transmission delay, so that the network device determines the load status, the performance status, and the like of the target cell based on the at least one of the N parameters.

A second aspect of embodiments of this application provides a signal transmission method. The method may be performed by a network device, or may be performed by a component (for example, a processor, a chip, or a chip system) of a network device. For example, the method is performed by the network device. The method includes: The network device first obtains N parameters of a secondary carrier cell, where the N parameters indicate a real-time status of the secondary carrier cell, and N is an integer greater than or equal to 1; and shuts down at least one first OFDM symbol in a first subframe of the secondary carrier cell after determining that at least one of the N parameters is less than or equal to a corresponding threshold and determining that the secondary carrier cell is in a first state, where the first OFDM symbol carries a CRS corresponding to a first port and/or a second port.

Specifically, to monitor a real-time status of a secondary carrier cell, the network device may first obtain N parameters of the secondary carrier cell, where N is an integer greater than or equal to 1. Each of the N parameters may indicate the real-time status of the secondary carrier cell, for example, a load status and/or a performance status of the secondary carrier cell.

Then, the network device may determine whether at least one of the N parameters is less than or equal to a corresponding threshold. If the network device determines that the at least one of the N parameters is less than or equal to the corresponding threshold, the network device then determines a status of the secondary carrier cell.

Finally, after it is determined that the secondary carrier cell is in a first state, fewer CRSs may be sent based on the status of the secondary carrier cell. Specifically, the network device shuts down at least one first OFDM symbol in a first subframe of the secondary carrier cell, where the first OFDM symbol carries a CRS corresponding to a first port and/or a second port.

It can be learned from the foregoing method that: after the network device determines that the at least one of the N parameters of the secondary carrier cell is less than or equal to the corresponding threshold, and determines that the secondary carrier cell has been configured for the terminal device and has not been activated, the network device shuts down the at least one first OFDM symbol in the first subframe of the secondary carrier cell, where the first OFDM symbol carries the CRS corresponding to the first port and/or the second port. Because the secondary carrier cell is in the first state, the network device shuts down the CRS on the at least one OFDM symbol in the first subframe without affecting the communication performance of the terminal device. Therefore, compared with the conventional symbol shutdown technology, in embodiments of this application, more OFDM symbols can be shut down while the communication performance of the terminal device is not affected, to further reduce the power consumption of the network device.

In a possible implementation, in a conventional solution, the first subframe has M first OFDM symbols, and M is an integer greater than or equal to 1. To implement energy saving, the network device may selectively shut down a plurality of first OFDM symbols in the first subframe. Specifically, a quantity of first OFDM symbols that are shut down is 1, 2, ..., M~l, or M, thereby improving flexibility and selectability of this solution.

In a possible implementation, both the CRS corresponding to the first port and the CRS corresponding to the second port indicate the terminal device to measure RSRP of the secondary carrier cell.

In a possible implementation, if at least three ports are configured for the secondary carrier cell, that the network device shuts down at least one first OFDM symbol in a first subframe of the secondary carrier cell includes: The network device shuts down the at least one first OFDM symbol and each second OFDM symbol in the first subframe of the secondary carrier cell, where each second OFDM symbol carries a CRS corresponding to a port other than the first port and the second port. It can be learned from the foregoing implementations that when the at least three ports are configured for the target cell, the network device may send fewer CRSs corresponding to the first port and the second port in the first subframe, and does not send the CRS corresponding to the port other than the first port and the second port, to shut down CRSs on a plurality of OFDM symbols, thereby reducing the power consumption of the network device.

In a possible implementation, if the secondary carrier cell is an FDD-based cell, the network device may select a subframe whose sequence number is 1, 2, 3, 4, 5, 6, 7, 8, or 9 as the first subframe of the secondary carrier cell.

In a possible implementation, if the secondary carrier cell is a TDD-based cell, the network device may select a subframe whose sequence number is 1, 3, 4, 5, 6, 7, 8, or 9 as the first subframe of the secondary carrier cell.

In a possible implementation, the method further includes: The network device keeps silent in each subframe of the secondary carrier cell if determining that the at least one parameter is less than or equal to the corresponding threshold and determining that the secondary carrier cell is in the second state, to further reduce the power consumption of the network device.

In a possible implementation, the method further includes: The network device skips sending a physical control format indicator channel (physical control format indicator channel, PCFICH), a physical hybrid automatic repeat indicator channel (physical hybrid arq indicator channel, PHICH), a physical downlink control channel (physical downlink control channel, PDCCH), and a physical downlink shared channel (physical downlink shared channel, PDSCH) in each subframe of the secondary carrier cell if determining that the at least one parameter is less than or equal to the corresponding threshold and determining that the secondary carrier cell is in the first state, to further reduce the power consumption of the network device.

In a possible implementation, the method further includes: The network device skips sending the PHICH, a common PDCCH, a paging message, a SIB message, and an RAR message in each subframe of the secondary carrier cell if determining that the at least one parameter is less than or equal to the corresponding threshold and determining that the secondary carrier cell is in a third state, to further reduce the power consumption of the network device.

In a possible implementation, the first state is that the secondary carrier cell has been configured for the terminal device and has not been activated.

In a possible implementation, the second state is that the secondary carrier cell has not been configured for the terminal device.

In a possible implementation, the third state is that the secondary carrier cell has been configured for the terminal device and has been activated.

In a possible implementation, the first port is port0, and the second port is port1.

In a possible implementation, the N parameters include: one or more of parameters such as uplink service load, downlink service load, a quantity of terminal devices, an information transmission rate, and an information transmission delay, so that the network device determines the load status, the performance status, and the like of the target cell based on the at least one of the N parameters.

A third aspect of embodiments of this application provides a processor, configured to perform the method according to any one of the first aspect or the second aspect.

A fourth aspect of embodiments of this application provides a network device, where the network device includes units configured to perform the method according to any one of the first aspect. For example, a transceiver unit (which may include a sending unit and a receiving unit) is configured to perform a signal or information sending/receiving operation in the solution according to any one of the first aspect; and a processing unit is configured to perform an operation such as information determining other than sending/receiving in the solution according to any one of the first aspect.

A fifth aspect of embodiments of this application provides a network device, where the network device includes units configured to perform the method according to any one of the second aspect. For example, a transceiver unit (which may include a sending unit and a receiving unit) is configured to perform a signal or information sending/receiving operation in the solution according to any one of the second aspect; and a processing unit is configured to perform an operation such as information determining other than sending/receiving in the solution according to any one of the second aspect.

A sixth aspect of embodiments of this application provides a communication apparatus. The communication apparatus may be the network device in the foregoing method designs, or a chip disposed in the terminal device. The communication apparatus includes a processor, coupled to a memory and configured to execute a computer program or instructions in the memory, to implement the method performed by the network device in any possible implementation of the foregoing solution. Optionally, the communication apparatus further includes the memory. Optionally, the communication apparatus further includes a communication interface, and the processor is coupled to the communication interface.

When the communication apparatus is the network device, the communication interface may be a transceiver or an input/output interface, configured to send/receive a signal or input/output the computer program or the instructions.

When the communication apparatus is the chip disposed in the network device, the communication interface may be an input/output interface, configured to send/receive a signal, or input/output the computer program or the instructions, where input corresponds to a receiving or obtaining operation, and output corresponds to a sending operation.

Optionally, the transceiver may be a transceiver circuit. Optionally, the input/output interface may be an input/output circuit.

A seventh aspect of embodiments of this application provides a computer program. When executed by a processor, the program is configured to perform the method according to any one of the first aspect or the second aspect.

An eighth aspect of embodiments of this application provides a computer program product. The program product includes computer program code. When the program code is run by a communication unit and a processing unit or a transceiver and a processor of a communication apparatus (for example, a network device), the communication device is enabled to perform the method according to any one of the first aspect or the second aspect.

A ninth aspect of embodiments of this application provides a computer-readable storage medium, storing a computer program or instructions. The computer program or the instructions enable a communication apparatus (for example, a network device) to perform the method according to the first aspect or the second aspect.

In embodiments of this application, if the foregoing apparatus corresponds to the chip, and the transceiver or the transceiver unit may be replaced with the input/output interface, a receiving operation corresponds to input or obtaining, and a sending operation corresponds to output.

According to the foregoing technical solutions, it can be learned that embodiments of this application have the following advantages:

In embodiments of this application, the network device shuts down the at least one first OFDM symbol in the first subframe after determining that the at least one of the N parameters is less than or equal to the corresponding threshold, and determining that each terminal device in connected mode in the target cell is in the DRX sleep period or no terminal in connected mode exists in the target cell, where the first OFDM symbol carries the CRS corresponding to the first port and/or the second port. Because each terminal device in connected mode in the target cell is in the DRX sleep period or no terminal in connected mode exists in the target cell, the network device shuts down the CRS on the at least one OFDM symbol in the first subframe without affecting the communication performance of the terminal device. Therefore, compared with the existing symbol shutdown technology, in embodiments of this application, more OFDM symbols can be shut down while the communication performance of the terminal device is ensured, to further reduce the power consumption of the network device.

### BRIEF DESCRIPTION OF DRAWINGS

FIG. 1 is a schematic diagram of an application scenario according to an embodiment of this application;
FIG. 2 is a schematic flowchart of a signal transmission method according to an embodiment of this application;
FIG. 3 is a schematic diagram of a DRX cycle according to an embodiment of this application;
FIG. 4 is a schematic diagram of a subframe of a target cell according to an embodiment of this application;
FIG. 5 is another schematic diagram of a subframe of a target cell according to an embodiment of this application;
FIG. 6 is a schematic diagram of a first subframe according to an embodiment of this application;
FIG. 7 is another schematic diagram of a first subframe according to an embodiment of this application;
FIG. 8 is still another schematic diagram of a first subframe according to an embodiment of this application;
FIG. 9 is yet another schematic diagram of a first subframe according to an embodiment of this application;
FIG. 10 is another schematic flowchart of a signal transmission method according to an embodiment of this application;
FIG. 11 is a schematic diagram of a multi-carrier scenario according to an embodiment of this application;
FIG. 12 is a schematic diagram of a structure of a network device according to an embodiment of this application;
FIG. 13 is another schematic diagram of a structure of a network device according to an embodiment of this application; and
FIG. 14 is still another schematic diagram of a structure of a network device according to an embodiment of this application.

### DESCRIPTION OF EMBODIMENTS

The following describes in detail technical solutions in embodiments of this application with reference to the accompanying drawings in embodiments of this application.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments described herein can be implemented in other orders than the order illustrated or described herein. Moreover, the terms "include", "contain" and any other variants mean to cover the non-exclusive inclusion, for example, a process, method, system, product, or device that includes a list of steps or modules is not necessarily limited to those modules, but may include other modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

It should be understood that, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following pieces (items)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

In addition, it should be understood that in descriptions of this application, terms such as "first" and "second" are merely intended for purposes of description, and should not be understood as an indication or implication of relative importance, cannot be understood as an indication or implication of a sequence, and cannot represent a quantity.

The technical solutions in embodiments of this application may be applied to various LTE communication systems, for example, an FDD system and a TDD system. Terms "system" and "network" are interchangeable. For example, a 3GPP-LTE system, various versions evolved based on LTE, and communication systems such as a 5^{th} generation (5 Generation, 5G) communication system and a new radio (new radio, NR) communication system. In addition, the communication systems may be further used in future-oriented communication technologies, and are all used in the technical solutions provided in embodiments of this application. The system architecture and the service scenario described in embodiments of this application are intended to describe the technical solutions in embodiments of this application more clearly, and do not constitute any limitation on the technical solutions provided in embodiments of this application. A person of ordinary skill in the art may know that the technical solutions provided in embodiments of this application are also applicable to similar technical problems with the evolution of the network architecture and the emergence of new service scenarios.

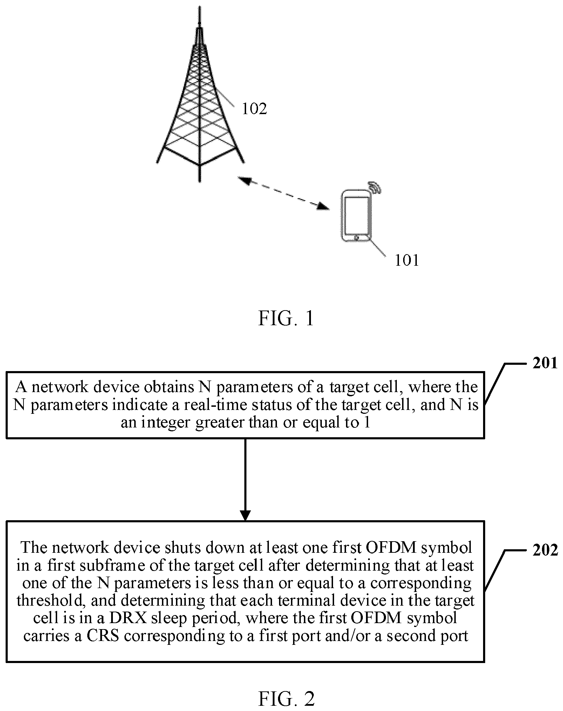

For ease of understanding, the following briefly describes an application scenario of embodiments of this application with reference to FIG. 1. FIG. 1 is a schematic diagram of an application scenario according to an embodiment of this application. As shown in FIG. 1, the application scenario includes a terminal device 101 and a network device 102. The terminal device 101 is wirelessly connected to the network device 102, and the network device 102 is configured to connect the terminal device 101 to a wireless network.

The terminal device 101, also referred to as user equipment (user equipment, UE), a mobile station (mobile station, MS), a mobile terminal (mobile terminal, MT), or the like, is a device that provides voice and/or data connectivity for users, or a chip disposed in the device, for example, a hand-held device or a vehicle-mounted device that has a wireless connection function. Currently, for example, the terminal device is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).

The network device 102 may be any device having a wireless transceiver function or a chip disposed in a device having a wireless transceiver function. The network device 102 includes but is not limited to a base station (for example, a base station BS, a NodeB NodeB, an evolved NodeB eNodeB or eNB, a gNodeB gNodeB or gNB in a fifth generation 5G communication system, a base station in a future communication system, or an access node, a wireless relay node, or a wireless backhaul node in a Wi-Fi system) and the like. The base station may be a macro base station, a micro base station, a picocell base station, a small cell, a relay station, or the like. A plurality of base stations may support a network using the foregoing one or more technologies, or a future evolved network. The base station may include one or more co-site or non-co-site transmission reception points (transmission reception points, TRPs). The network device 102 may alternatively be a radio controller, a central unit (central unit, CU), a distributed unit (distributed unit, DU), or the like in a cloud radio access network (cloud radio access network, CRAN) scenario. The following uses an example in which the network device 102 is the base station for description. The plurality of network devices 102 may be base stations of a same type, or may be base stations of different types. The base station may communicate with the terminal device 101, or may communicate with the terminal device 101 via the relay station. The terminal device 101 may support communication with a plurality of base stations using different technologies. For example, the terminal device 101 may support communication with a base station supporting an LTE network, may support communication with a base station supporting a 5G network, or may support dual connectivity to a base station supporting an LTE network and a base station supporting a 5G network. For example, the terminal device 101 accesses a RAN node of a wireless network. Currently, some examples of the RAN node are: a gNB, a TRP, an evolved NodeB (evolved Node B, eNB), a next-generation evolved NodeB (next generation evolved Node B, LTE ng-eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a base band unit (base band unit, BBU), a Wi-Fi access point (access point, AP), or the like.

In the scenario shown in FIG. 1, energy-saving technologies such as symbol shutdown may be usually used to reduce power consumption of the network device 102. During symbol shutdown, to ensure normal communication between the terminal device 101 and the network device 102, the network device 102 needs to send a CRS on at least four OFDM symbols in one subframe. On this basis, how to further reduce the power consumption of the network device 102 without affecting communication performance of the terminal device 101 is a problem to be resolved urgently.

To resolve the foregoing problem, an embodiment of this application provides a signal transmission method. FIG. 2 is a schematic flowchart of a signal transmission method according to an embodiment of this application. As shown in FIG. 2, the method may be performed by a network device, or may be performed by a component (for example, a processor, a chip, or a chip system) of a network device. For example, the method is performed by the network device. The method includes the following steps.

201. The network device obtains N parameters of a target cell, where the N parameters indicate a real-time status of the target cell, and N is an integer greater than or equal to 1.

In this embodiment, the network device may obtain N parameters of a target cell in real time. Each of the N parameters obtained by the network device may indicate a real-time status of the target cell, for example, a load status and/or a performance status. In a possible implementation, the N parameters obtained by the network device may include one or more of parameters such as uplink service load, downlink service load, a quantity of terminal devices in the target cell, an information transmission rate, and an information transmission delay. For example, the network device may obtain the downlink service load of the target cell, that is, determine that a utilization rate of a downlink physical resource block (physical resource block, PRB) of the target cell is 50%. For another example, the network device may obtain 15 terminal devices in connected mode in the target cell. It should be noted that the target cell may be a cell in a plurality of scenarios, or may be referred to as a carrier in a plurality of scenarios, which are separately described as follows.

In a possible implementation, the target cell may be a cell (which may also be referred to as a single-carrier cell) in a single-carrier scenario, and the single-carrier cell is a single carrier allocated by the network device to a sector.

In another possible implementation, the target cell may be a primary carrier cell or a secondary carrier cell in a multi-carrier scenario. Based on a carrier aggregation (carrier aggregation, CA) technology, the network device may allocate one primary carrier and at least one secondary carrier to a terminal device in a sector. The primary carrier cell is a carrier allocated by the network device to a terminal device in a sector, and the secondary carrier cell is a carrier allocated by the network device to the terminal device in the sector.

202. The network device shuts down at least one first OFDM symbol in a first subframe of the target cell after determining that at least one of the N parameters is less than or equal to a corresponding threshold, and determining that each terminal device in connected mode in the target cell is in a DRX sleep period or no terminal in connected mode exists in the target cell, where the first OFDM symbol carries a CRS corresponding to a first port and/or a second port.

After obtaining the N parameters of the target cell, the network device may select one or more parameters from the N parameters for determining. For example, the network device may select a parameter from the N parameters, and determine whether the parameter is less than or equal to a corresponding threshold. For another example, the network device may select a plurality of parameters from the N parameters, and determine whether each selected parameter is less than or equal to a corresponding threshold. It should be noted that the network device sets a corresponding threshold for each of the N parameters, and the threshold may be set in a plurality of manners. In a possible implementation, the network device may preset a threshold corresponding to each parameter. In another possible implementation, the network device may dynamically set a threshold corresponding to each parameter based on indication information of a terminal device in the target cell. In another possible implementation, the network device may further dynamically set a threshold corresponding to each parameter based on the real-time status of the target cell.

In addition, the threshold mentioned above may be a specific value. For example, the parameter is a quantity of terminal devices in connected mode in the target cell. When a threshold corresponding to the quantity of terminal devices in connected mode is 20, it indicates that the network device sets a value range or a condition for the parameter To be specific, if the quantity of terminal devices in connected mode in the target cell falls within a range of 0 to 20, it is determined that the parameter meets the condition; or if the quantity of terminal devices in connected mode in the target cell falls beyond the range of 0 to 20, it is determined that the parameter does not meet the condition. For example, when determining that the quantity of terminal devices in connected mode in the target cell is 15, the network device determines that the parameter meets the condition, and may enter a next step of determining.

If determining that at least one of the N parameters is less than or equal to a corresponding threshold, the network device determines whether all terminal devices in the target cell are in DRX sleep periods. In another possible implementation, if determining that the at least one of the N parameters is less than or equal to the corresponding threshold, the network device may determine whether a terminal in connected mode exists in the target cell.

It should be noted that the terminal device in connected mode is a terminal device that establishes a radio resource control (radio resource control, RRC) connection to the network device, and a DRX cycle of the terminal device in connected mode includes a DRX active period and a DRX sleep period. Therefore, in this embodiment, that all the terminal devices in the target cell are in the DRX sleep periods may be understood as that all the terminal devices in connected mode in the target cell are in the DRX sleep periods. Similarly, that at least one terminal device in the target cell is in a DRX active period may be understood as that at least one terminal device in connected mode in the target cell is in the DRX active period, and that no terminal in connected mode exists in the target cell may be understood as that no terminal in the cell establishes an RRC connection to the network device. Details are not described subsequently.

In a possible implementation, the network device may align DRX cycles of all the terminal devices in connected mode in the target cell. To be specific, the DRX cycles of all the terminal devices in connected mode in the target cell are of equal length, and the DRX cycles of all the terminal devices in connected mode have same start time and same end time. It should be noted that lengths of DRX active periods of different terminal devices may be the same or different although the DRX cycles of all the terminal devices are aligned. Similarly, lengths of DRX sleep periods of different terminal devices may be the same or different. For example, it is assumed that terminal devices A, B, and C are located in a same target cell, and DRX cycles of the three terminal devices are all 20 ms and are aligned. A DRX active period of the terminal device A is 5 ms, a DRX active period of the terminal device B is 5 ms, and a DRX active period of the terminal device C is 10 ms. Therefore, a DRX sleep period of the terminal device A is 15 ms, a DRX sleep period of the terminal device B is 15 ms, and a DRX sleep period of the terminal device C is 10 ms. The network device may determine a status of a current time by monitoring which phase of the DRX cycles of the three terminal devices the current time is in. A moment 0 is used as start time of the DRX cycles of the three terminal devices. If the current time is the 4^{th} ms, the network device determines that the current time falls into the DRX active periods of the terminal devices A, B, and C, and may determine that the target cell enters the DRX active period. If the current time is the 8^{th} ms, the network device determines that the current time falls into the DRX active period of the terminal device C, and may determine that the target cell enters the DRX active period. If the current time is the 15^{th} ms, the network device determines that the current time falls into the DRX sleep periods of the terminal devices A, B, and C, and may determine that the target cell enters the DRX sleep period. Therefore, if determining that at least one terminal device in the target cell is in the DRX active period, the network device may determine that the target cell enters the DRX active period at the current time. If determining that all the terminal devices in the target cell are in the DRX sleep periods, the network device may determine that the target cell enters the DRX sleep period at the current time.

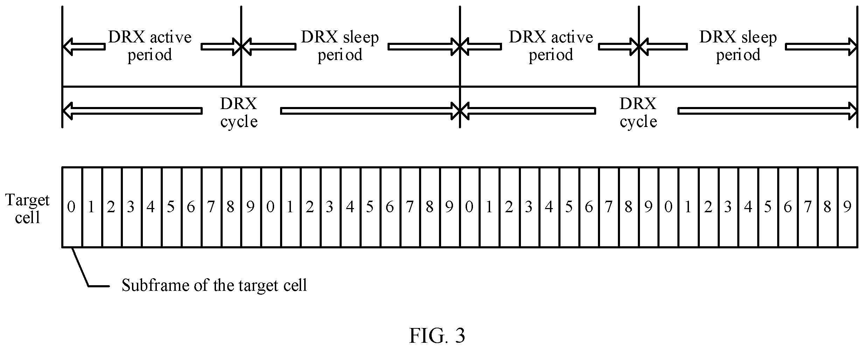

Because the DRX cycles of all the terminal devices in connected mode in the target cell are aligned (it should be noted that even if the DRX cycles of the terminal devices in connected mode in the target cell are not aligned (that is, the DRX cycles of different terminal devices in connected mode have different start time or different end time), the network device can still determine which phase of the DRX cycles all the terminal devices in connected mode in the target cell are in, that is, in the DRX active periods or in the DRX sleep periods), the network device can determine which phase of the DRX cycles of all the terminal devices in connected mode time domain information (that is, specific subframes of the target cell) of the target cell is in, that is, in the DRX active periods or in the DRX sleep periods. Specifically, that all the terminal devices in the target cell are in the DRX sleep periods may be understood that the subframes of the target cell are in the DRX sleep periods. Similarly, that at least one terminal device in the target cell is in the DRX active period may be understood that the subframe of the target cell is in the DRX active period. For further understanding, the following describes the DRX cycle with reference to FIG. 3. FIG. 3 is a schematic diagram of a DRX cycle according to an embodiment of this application. As shown in FIG. 3, for ease of drawing, it is assumed that a DRX cycle is 20 ms, a target cell includes a plurality of subframes, and every ten subframes form one frame. In a plurality of DRX cycles, DRX active periods and DRX sleep periods appear alternately. Therefore, some subframes of the target cell are in the DRX active periods, and some other subframes are in the DRX sleep periods.

It can be learned based on FIG. 3 that, in a plurality of frames of the target cell, sequence numbers of 10 subframes included in each frame are respectively 0 to 9, and subframes with different sequence numbers may carry same signals or different signals. It should be noted that the subframe in this embodiment is an example of a non-multicast broadcast single frequency network (multicast broadcast single frequency network, MBSFN) subframe. In a possible implementation, if the target cell is an FDD-based cell, the subframe in this embodiment may be an FDD-based downlink subframe and may include 14 OFDM symbols or 12 OFDM symbols. In another possible implementation, if the target cell is a TDD-based cell, the subframe in this embodiment may be a TDD-based downlink subframe and a TDD-based special subframe and may include 14 OFDM symbols or 12 OFDM symbols. For ease of description, an example in which one subframe includes 14 OFDM symbols is used for description in the following descriptions and the accompanying drawings.

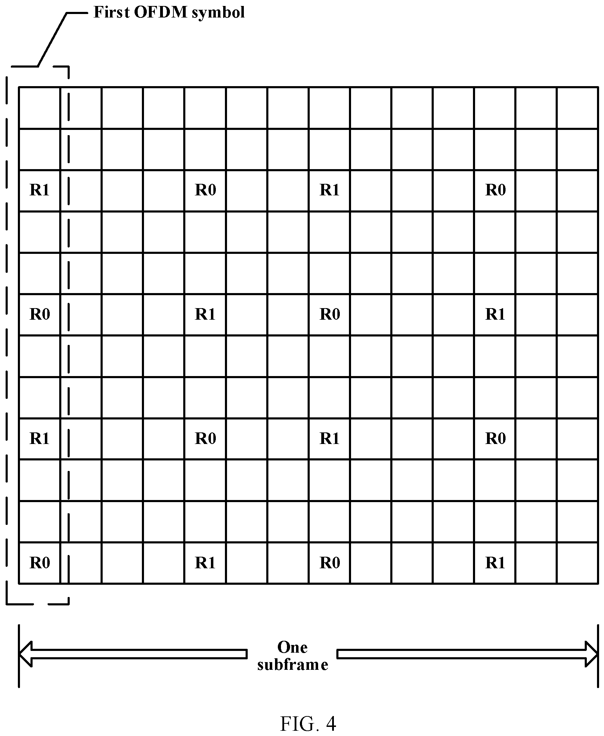

When at least one terminal device in the target cell is in the DRX active period (for ease of description, which is referred to as that at least one terminal device enters the DRX active period for short below) and all the terminal devices in the target cell are in the DRX sleep periods (which is referred to as that all the terminal devices in the target cell enter the DRX sleep period for short below), the network device performs different CRS processing in the subframes of the target cell. It may be understood that, CRS processing performed by the network device when no terminal in connected mode exists in the target cell may be the same as CRS processing performed by the network device when all the terminal devices in the target cell are in the DRX sleep periods. Therefore, the following uses CRS processing performed by the network device when all the terminal devices in the target cell are in the DRX sleep periods as an example for description. Details are not described subsequently. For ease of understanding, the following describes different CRS processing in the DRX cycle with reference to FIG. 4. FIG. 4 is a schematic diagram of a subframe of a target cell according to an embodiment of this application.

It should be noted that, on 14 OFDM symbols in a subframe, some OFDM symbols (which may also be referred to as an OFDM symbol periodicity) are configured to send (carry) a CRS configured for port0 (which may also be referred to as a CRS corresponding to port0, that is, R0) and/or a CRS configured for port1 (which may also be referred to as a CRS corresponding to port1, that is, Rl), where the OFDM symbols are for sending R0 and/or R1 are first OFDM symbols. In addition, some other OFDM symbols are configured to send other CRSs than R0 and R1, for example, a CRS (that is, R2) configured for port2 and a CRS (that is, R3) configured for port3, where the OFDM symbols are for sending the CRSs other than R0 and R1 are second OFDM symbols. Details are not described subsequently.

When the network device determines that at least one terminal device in the target cell is in the DRX active period, the network device normally sends CRSs in each subframe of the target cell. If different quantities of protocol ports are configured for the target cell, there are different corresponding cases when the network device normally sends the CRSs. As shown in FIG. 4, it is assumed that two protocol ports are configured for the target cell: port0 and port1. After the DRX active period is entered, the network device may send R0 and Rl on four first OFDM symbols in each subframe of the target cell.

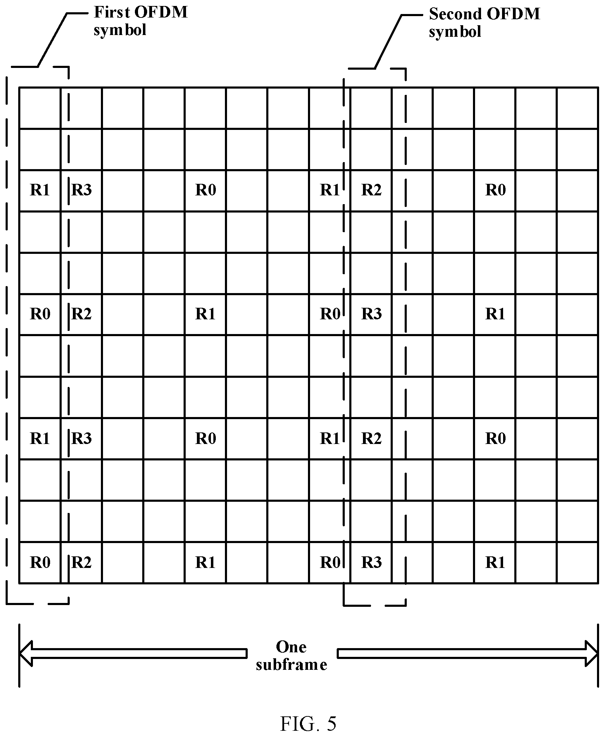

It should be understood that in FIG. 4, an example in which only two ports are configured for the target cell is used for description, and a quantity of ports configured for the target cell in this application is not limited. For example, only one protocol port may alternatively be configured for the target cell: port0. After the DRX active period is entered, the network device may send R0 on four first OFDM symbols in each subframe of the target cell. For another example (as shown in FIG. 5, FIG. 5 is another schematic diagram of a subframe of a target cell according to an embodiment of this application), it is assumed that four ports are configured for the target cell: port0, port1, port2, and port3. After the DRX active period is entered, the network device may send R0 and R1 on four first OFDM symbols and send R2 and R3 on two second OFDM symbols in each subframe of the target cell.

It should further be understood that in FIG. 4 and FIG. 5, only the FDD-based downlink subframe is used as an example for schematic description. Alternatively, the TDD-based downlink subframe and the TDD-based special subframe may be subframes of the target cell. For a case in which the network device normally sends the CRSs in the TDD-based downlink subframe, refer to the foregoing related description in which the network device normally sends the CRSs in the FDD-based downlink subframe. Details are not described herein again. It should be noted that, when normally sending the CRSs in the TDD-based special subframe, the network device can send the CRSs only in a downlink pilot time slot (downlink pilot time slot, DwPTS) in the special subframe, and a quantity of OFDM symbols included in the DwPTS changes with different special subframe ratios. For example, when the special subframe ratio is 0, the DwPTS in the special subframe includes only three OFDM symbols. In this case, if two ports are configured for the target cell, the network device can send R0 and R1 on one first OFDM symbol in the special subframe at most. If four ports are configured for the target cell, the network device can send R0 and R1 on one first OFDM symbol in the special subframe and send R2 and R3 on one second OFDM symbol in the special subframe. For another example, when the special subframe ratio is 1, the DwPTS in the special subframe includes nine OFDM symbols. In this case, if two ports are configured for the target cell, the network device can send R0 and R1 on three first OFDM symbols in the special subframe at most. If four ports are configured for the target cell, the network device can send R0 and R1 on three first OFDM symbols in the special subframe at most and send R2 and R3 on two second OFDM symbols in the special subframe. For another example, when the special subframe ratio is 4, the DwPTS in the special subframe includes 12 OFDM symbols. In this case, if two ports are configured for the target cell, the network device can send R0 and R1 on four first OFDM symbols in the special subframe at most. If four ports are configured for the target cell, the network device can send R0 and R1 on four first OFDM symbols in the special subframe at most and send R2 and R3 on two second OFDM symbols in the special subframe.

Based on the foregoing description, various cases in which the network device normally sends the CRSs in the subframes of the target cell after the DRX active period is entered are shown in Table 1:

**Table 1**

| | FDD-based downlink subframe | TDD-based downlink subframe | TDD-based special subframe |
|---|---|---|---|
| one port is configured for the target cell | send R0 on four first OFDM symbols | send R0 on four first OFDM symbols | send R0 on one, two, three, or four first OFDM symbols |
| two ports are configured for the target cell | send R0 and R1 on four first OFDM symbols | send R0 and R1 on four first OFDM symbols | send R0 and R1 on one, two, three, or four first OFDM symbols |
| four ports are configured for the target cell | send R0 and R1 on four first OFDM symbols, and send R2 and R3 on two second OFDM symbols | send R0 and R1 on four first OFDM symbols, and send R2 and R3 on two second OFDM symbols | send R0 and R1 on one, two, three, or four first OFDM symbols, and send R2 and R3 on one or two second OFDM symbols |
| ... | ... | ... | ... |

When determining that all the terminal devices in the target cell are in the DRX sleep periods, the network device may send fewer CRSs. In other words, the network device shuts down at least one first OFDM symbol in a first subframe of the target cell. It may be understood that shutting down a first OFDM symbol means that the network device does not send the CRS on the first OFDM symbol. Specifically, first subframes of the target cell usually are a part of subframes in each frame of the target cell, and are subframes with specific sequence numbers. The first subframe may be the FDD-based downlink subframe, or may be the TDD-based downlink subframe, which is separately described below.

In a possible implementation, if the target cell is an FDD-based cell, for a subframe whose sequence number is 1, 2, 3, 6, 7, or 8 in each frame of the target cell, some OFDM symbols (for example, a first OFDM symbol and a second OFDM symbol) in the subframes carry CRSs, and some other OFDM symbols carry another signal (but whether to carry another signal actually depends on a specific communication requirement), that is, the subframes may carry another signal, for example, a SIB message or an RAR message. The network device may select a subframe that actually does not carry the SIB message and/or the RAR message from the subframe whose sequence number is 1, 2, 3, 6, 7, or 8 as the first subframe of the target cell.

In another possible implementation, if the target cell is a TDD-based cell, for a subframe whose sequence number is 3, 4, 7, 8, or 9 (that is, a downlink subframe whose sequence number is 3, 4, 7, 8, or 9) in each frame of the target cell, some OFDM symbols in the subframes carry CRSs, and some other OFDM symbols carry another signal, for example, a SIB message or an RAR message. The network device may select a subframe that actually does not carry the SIB message and/or the RAR message from the subframe whose sequence number is 3, 4, 7, 8, or 9 as the first subframe of the target cell.

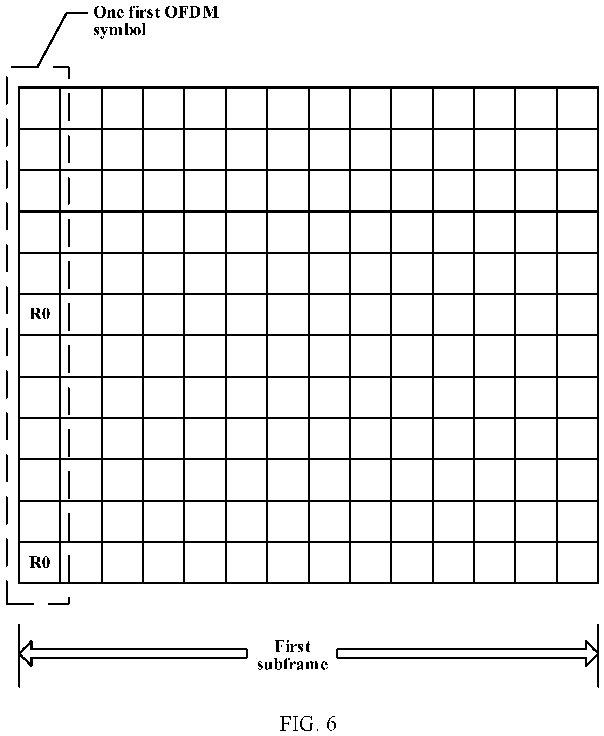

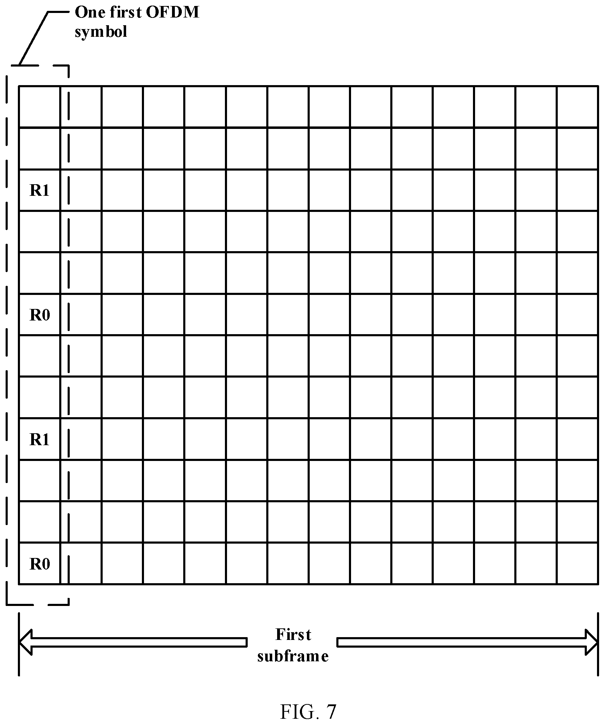

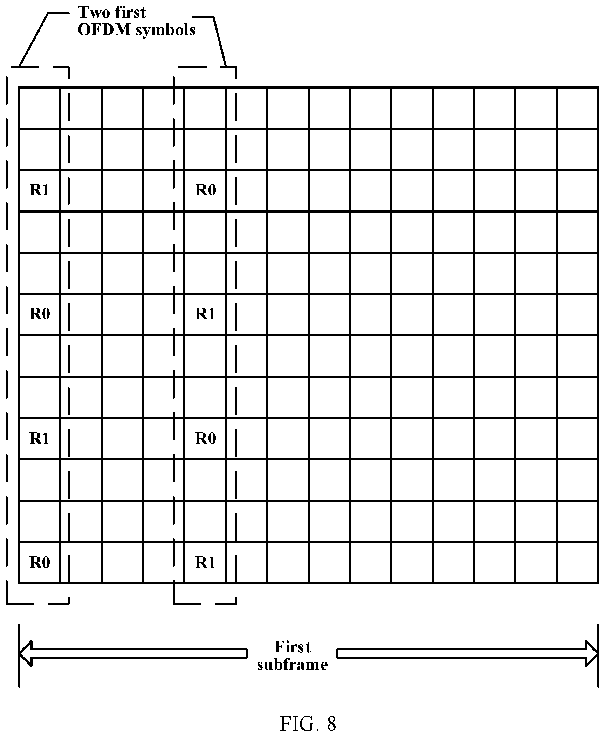

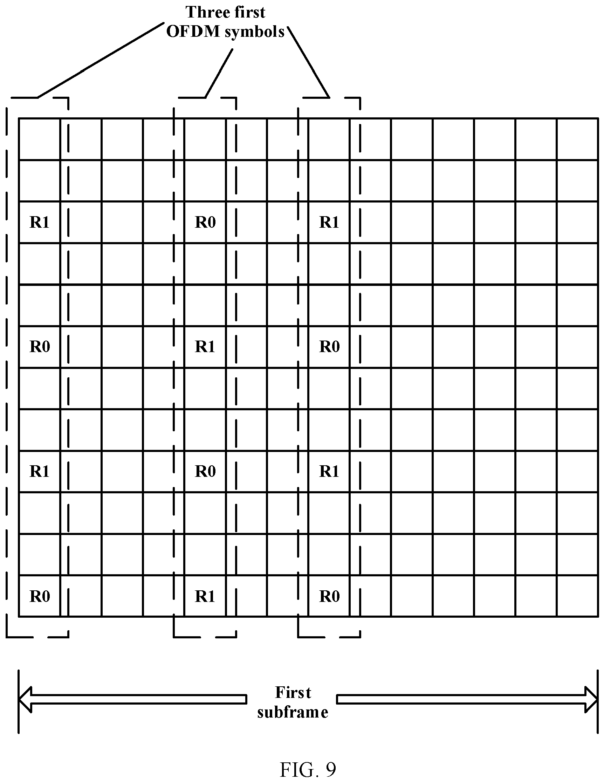

After determining the first subframe of the target cell, the network device may send fewer CRSs in the first subframe. The network device may send fewer CRSs in a plurality of manners, which are described below with reference to FIG. 6 to FIG. 9. FIG. 6 is a schematic diagram of a first subframe according to an embodiment of this application. FIG. 7 is another schematic diagram of a first subframe according to an embodiment of this application. FIG. 8 is still another schematic diagram of a first subframe according to an embodiment of this application. FIG. 9 is yet another schematic diagram of a first subframe according to an embodiment of this application.

In a possible implementation, if the target cell is the FDD-based cell and one port (port0) is configured for the target cell, the network device shuts down at least one (four, three, two, or one) first OFDM symbol in the first subframe, that is, does not send R0 in the first subframe or sends R0 on one, two, or three first OFDM symbols (for example, three first OFDM symbols are shut down, that is, R0 is sent on only one first OFDM symbol in FIG. 6). Compared with a case in which the CRSs are normally sent, the CRSs on one to four OFDM symbols may be shut down.

In another possible implementation, if the target cell is the FDD-based cell and two ports (port0 and port1) are configured for the target cell, the network device shuts down the at least one first OFDM symbol in the first subframe, that is, does not send R0 and R1 in the first subframe or sends R0 and R1 on one, two, or three first OFDM symbols (for example, three first OFDM symbols are shut down, that is, R0 and R1 are sent on only one first OFDM symbol in FIG. 7, two first OFDM symbols are shut down, that is, R0 and R1 are sent on only two first OFDM symbols in FIG. 8, and one first OFDM symbol is shut down, that is, R0 and R1 are sent on only three first OFDM symbols in FIG. 9). Compared with the case in which the CRSs are normally sent, the CRSs on one to four OFDM symbols may be shut down.

In another possible implementation, if the target cell is the FDD-based cell and four ports (port0, port1, port2, and port3) are configured for the target cell, the network device shuts down the at least one first OFDM symbol and one second OFDM symbol in the first subframe, that is, the network device does not send the CRSs in the first subframe or sends R0 and R1 on only one, two, or three first OFDM symbols, and sends R2 and R3 on only one second OFDM symbol. In addition, if more ports, for example, eight ports, are further configured for the target cell, the network device shuts down the at least one first OFDM symbol and some second OFDM symbols in the first subframe.

In another possible implementation, if the target cell is the FDD-based cell and four ports (port0, port1, port2, and port3) are configured for the target cell, the network device shuts down the at least one first OFDM symbol and all second OFDM symbols in the first subframe, that is, the network device does not send the CRSs in the first subframe or sends R0 and R1 on only one, two, or three first OFDM symbols, and does not send R2 and R3 (if the network device sends R0 and R1 on one first OFDM symbol in the first subframe, this may be the same as the case shown in FIG. 7; if the network device sends R0 and R1 on two first OFDM symbols in the first subframe, this may be the same as the case shown in FIG. 8; and if the network device sends R0 and R1 on three first OFDM symbols in the first subframe, this may be the same as the case shown in FIG. 9). Compared with the case in which the CRSs are normally sent, the CRSs on three to six OFDM symbols may be shut down. In addition, if more ports, for example, eight ports, are further configured for the target cell, the network device also sends R0 and R1 on only one, two, or three first OFDM symbols in the first subframe, that is, the network device does not send the CRSs or sends only R0 and R1 in the first subframe, but does not send R2, R3, and other CRSs.

In another possible implementation, if the target cell is the TDD-based cell, and the first subframe is the TDD-based downlink subframe, because a structure of the FDD-based downlink subframe is similar to that of the TDD-based downlink subframe, for related descriptions that the network device sends fewer CRSs in the TDD-based downlink subframe, refer to the foregoing descriptions. Details are not described herein again.

Based on the foregoing description, various cases in which the network device sends fewer CRSs in the first subframe of the target cell after the DRX sleep period is entered are shown in Table 2:

**Table 2**

| | FDD-based downlink subframe | TDD-based downlink subframe |
|---|---|---|
| one port is configured for the target cell | send R0 on zero, one, two, or three first OFDM symbols | send R0 on zero, one, two, or three first OFDM symbols |
| two ports are configured for the target cell | send R0 and R1 on zero, one, two, or three first OFDM symbols | send R0 and R1 on zero, one, two, or three first OFDM symbols |
| four ports are configured for the target cell | send R0 and R1 on zero, one, two, or three first OFDM symbols, and do not send R2 and R3 | send R0 and R1 on zero, one, two, or three first OFDM symbols, and do not send R2 and R3 |
| ... | ... | ... |

Further, if one or two ports are configured for the target cell, the network normally sends the CRSs in other subframes than the first subframe. For details, refer to related descriptions of the first row and the second row in Table 1. Details are not described herein again. If at least three ports are configured for the target cell, after the DRX sleep period is entered, the network device can not only send fewer CRSs in the first subframe of the target cell, but also send fewer CRSs in a second subframe of the target cell. The second subframe of the target cell usually refers to a part of subframes in each frame of the target cell, and is a subframe with a specific sequence number. The second subframe may be the FDD-based downlink subframe, or may be the TDD-based downlink subframe, or may be the TDD-based special subframe. Descriptions are provided separately below.

In a possible implementation, if the target cell is the FDD-based cell, for a subframe whose sequence number is 4, 5, or 9 in each frame of the target cell, some OFDM symbols in the subframes carry CRSs, and some other OFDM symbols carry another signal (whether to carry another signal actually depends on a specific communication requirement), that is, the subframes may carry another signal, for example, a paging message, a SIB message, or an RAR message. Some subframes in the subframes may be preset as PO subframes. For example, in the subframe whose sequence number is 4, 5, or 9, the subframe whose sequence number is 4 may be set as a PO subframe, indicating that the subframe carries the paging message. The network device may select a subframe that is a non-PO subframe and that actually does not carry the SIB message and/or the RAR message from the subframe whose sequence number is 4, 5, or 9 as the second subframe of the target cell.

In another possible implementation, if the target cell is the TDD-based cell, for a subframe (which may be a downlink subframe or a special subframe) whose sequence number is 1, 5, or 6 in each frame of the target cell, some OFDM symbols in the subframes are used to carry CRSs, and some other OFDM symbols carry another signal, for example, a paging message, a SIB message, or an RAR message. The network device may select a subframe that is a non-PO subframe and that actually does not carry the SIB message and/or the RAR message from the subframe whose sequence number is 1, 5, or 6 as the second subframe of the target cell.

After determining the second subframe of the target cell, the network device may send fewer CRSs in the second subframe. Specifically, the network device shuts down each second OFDM symbol and does not shut down the first OFDM symbol in the second subframe of the target cell. In other words, the network device normally sends only R0 and/or R1, but does not send CRSs such as R2 and R3 in the second subframe.

It may be understood that when the second subframe is the FDD-based downlink subframe, the network device sends R0 and/or R1 on only four first OFDM symbols in the second subframe, but does not send the CRSs such as R2 and R3. When the second subframe is the TDD-based downlink subframe, the network device sends R0 and/or R1 on only four first OFDM symbols in the second subframe, but does not send the CRSs such as R2 and R3. When the second subframe is the TDD-based special subframe, the network device sends R0 and/or R1 on only one to four first OFDM symbols in the second subframe, but does not send the CRSs such as R2 and R3. Compared with the case in which the CRSs are normally sent, the network device can also shut down the CRSs on at least one OFDM symbol.

Based on the foregoing description, various cases in which the network device sends fewer CRSs in the second subframe of the target cell after the DRX sleep period is entered are shown in Table 3:

**Table 3**

| | FDD-based downlink subframe | TDD-based downlink subframe | TDD-based special subframe |
|---|---|---|---|
| four ports are configured for the target cell | send R0 and R1 on four first OFDM symbols, and skip sending R2 and R3 | send R0 and R1 on four first OFDM symbols, and skip sending R2 and R3 | send R0 and R1 on one, two, three, or four first OFDM symbols, and skip sending R2 and R3 |
| ... | ... | ... | ... |

Further, a terminal device in idle mode and a terminal device (which may also be referred to as a neighboring terminal device) located in a neighboring cell of the target cell continuously measure RSRP of the target cell. To ensure that RSRP measurement by the terminal devices is not affected, CRS processing may be separately performed on the terminal device in idle mode and the neighboring terminal device.

Specifically, the network device may send notification information to the neighboring terminal device via the target cell and the neighboring cell, where the notification information indicates the neighboring terminal device to receive R0 and/or R1 in a third subframe of the target cell (R0 and R1 may indicate the terminal device to measure the RSRP of the target cell). If the target cell is the FDD-based cell, the third subframe may be a subframe whose sequence number is 0, 4, 5, or 9. If the target cell is the TDD-based cell, the third subframe may be a subframe whose sequence number is 0, 1, 5, or 6. In the FDD-based cell or the TDD-based cell, the subframe whose sequence number is 0 needs to carry a master information block (Master Information Block, MIB) message. Therefore, the network device needs to normally send the CRSs in the subframe whose sequence number is 0. It can be learned from the foregoing related descriptions of normally sending the CRSs and sending fewer CRSs that, in the FDD-based cell, the network device normally sends at least R0 and/or R1 in the subframe whose sequence number is 4, 5, or 9; and in the TDD-based cell, the network device normally sends at least R0 and/or R1 in the subframe whose sequence number is 1, 5, or 6. Therefore, the network device ensures that at least R0 and/or R1 is normally sent in the third subframe. Therefore, the neighboring terminal device may receive R0 and/or R1 in the third subframe of the target cell, thereby ensuring that RSRP measurement is not affected.

Similarly, the terminal device in idle mode may also receive R0 and/or R1 in the third subframe of the target cell, thereby ensuring that RSRP measurement is not affected. A difference between the terminal device in idle mode and the neighboring terminal device lies in that the terminal device in idle mode can receive R0 and/or R1 in the third subframe of the target without being notified by the network device. However, the neighboring terminal device requires the network device to send a notification message in advance, and then receives R0 and/or R1 in the third subframe of the target based on the notification message. The notification message may include special camouflage information. For example, the notification message can notify the neighboring terminal device that the target cell is an MBSFN cell (but the target cell is actually a normal cell), so that the neighboring terminal device receives R0 and/or R1 in the third subframe of the target.

In this embodiment, after determining that the at least one of the N parameters is less than or equal to the corresponding threshold, and determining that each terminal device in the target cell is in the DRX sleep period, the network device shuts down the at least one first OFDM symbol in the first subframe, where the first OFDM symbol carries the CRS corresponding to the first port and/or the second port. Because each terminal device in the target cell is in the DRX sleep period, the network device shuts down the CRS on the at least one OFDM symbol in the first subframe without affecting the communication performance of the terminal device. Therefore, compared with the conventional symbol shutdown technology, in embodiments of this application, more OFDM symbols can be shut down while the communication performance of the terminal device is ensured, to further reduce the power consumption of the network device.

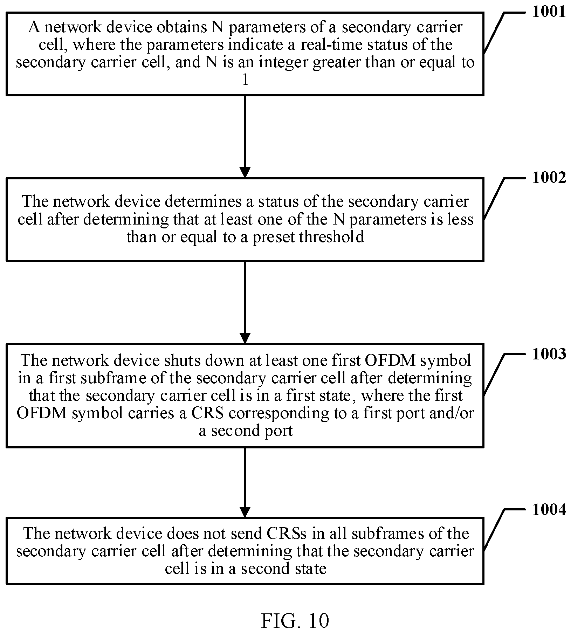

FIG. 10 is another schematic flowchart of a signal transmission method according to an embodiment of this application. As shown in FIG. 10, the method may be performed by a network device, or may be performed by a component (for example, a processor, a chip, or a chip system) of a network device. For example, the method is performed by the network device. The method includes the following steps.

1001. The network device obtains N parameters of a secondary carrier cell, where the parameters indicate a real-time status of the secondary carrier cell, and N is an integer greater than or equal to 1.

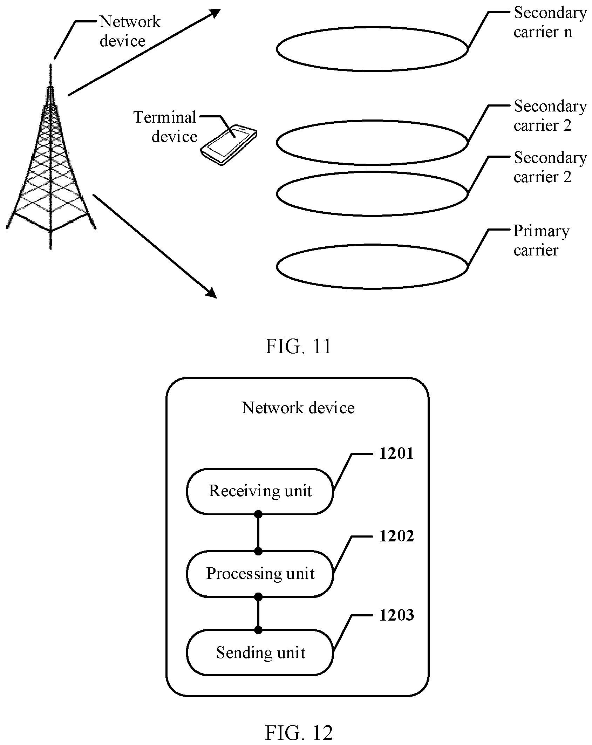

In this embodiment, the network device may obtain N parameters of a secondary carrier cell in real time, where each of the N parameters obtained by the network device may indicate a real-time status of the secondary carrier cell, for example, a load status and a performance status. In a possible implementation, the N parameters obtained by the network device may include one or more of parameters such as uplink service load, downlink service load, a quantity of terminal devices in the secondary carrier cell, an information transmission rate, and an information transmission delay. FIG. 11 is a schematic diagram of a multi-carrier scenario according to an embodiment of this application. As shown in FIG. 11, this embodiment may be applied to a multi-carrier scenario. Specifically, based on the CA technology, the network device may allocate one primary carrier and at least one secondary carrier (n secondary carriers are used as an example in FIG. 11, and n is an integer greater than or equal to 1) to a terminal device in a sector. The secondary carrier cell is a secondary carrier allocated by the network device to a terminal device in a sector.

1002. The network device determines a status of the secondary carrier cell after determining that at least one of the N parameters is less than or equal to a preset threshold.

After obtaining the N parameters of the secondary carrier cell, the network device may determine whether at least one of the N parameters is less than or equal to a corresponding threshold. If determining that the at least one of the N parameters is less than or equal to the corresponding threshold, the network device then determines a status of the secondary carrier cell. Specifically, the secondary carrier cell has three states: a first state, a second state, and a third state. The first state means that the secondary carrier cell has been configured for the terminal device and has not been activated, that is, the secondary carrier cell has been configured for one or more terminal devices by the network device, but the secondary carrier cell has not been activated by the network device. The second state means that the secondary carrier cell has not been configured for the terminal device, that is, the secondary carrier cell has not been configured for any terminal device by the network device. The third state means that the secondary carrier cell has been configured for the terminal device and has been activated, that is, the secondary carrier cell has been configured for one or more terminal devices by the network device, and the secondary carrier cell has been activated by the network device.

1003. The network device shuts down at least one first OFDM symbol in a first subframe of the secondary carrier cell after determining that the secondary carrier cell is in a first state, where the first OFDM symbol carries a CRS corresponding to a first port and/or a second port.

When determining that the secondary carrier cell has been configured for the terminal device and has not been activated, the network device may send fewer CRSs. Specifically, the network device shuts down at least one first OFDM symbol in a first subframe of the secondary carrier cell, that is, the network device does not send R0 and/or R1 in the first subframe of the secondary carrier cell or sends R0 and R1 on one, two, or three OFDM symbols. The first subframe of the target cell usually refers to a part of subframes in each frame of the target cell, and is a subframe with a specific sequence number The first subframe may be determined in a plurality of manners, which are separately described below.

In a possible implementation, if the secondary carrier cell is an FDD-based cell, the network device selects a subframe whose sequence number is 1, 2, 3, 4, 5, 6, 7, 8, or 9 in each frame of the secondary carrier cell as the first subframe of the secondary carrier cell.

In another possible implementation, if the secondary carrier cell is a TDD-based cell, the network device selects a subframe (which may be a downlink subframe or a special subframe) whose sequence number is 1, 3, 4, 5, 6, 7, 8, or 9 in each frame of the secondary carrier cell as the first subframe of the secondary carrier cell.

After determining the first subframe of the secondary carrier cell, the network device may send fewer CRSs in the first subframe. For a description that the network device sends fewer CRSs in the first subframe of the secondary carrier cell, refer to the related description that the network device sends fewer CRSs in the first subframe of the target cell in the embodiment shown in FIG. 2. Details are not described herein again.

In addition, when the network device determines that the secondary carrier cell has been configured for the terminal device and has not been activated, in the FDD-based cell or the TDD-based cell, a subframe whose sequence number is 0 needs to carry an MIB message. Therefore, the network device needs to normally send the CRSs in the subframe whose sequence number is 0.

1004. The network device does not send CRSs in all subframes of the secondary carrier cell after determining that the secondary carrier cell is in a second state.

When determining that the secondary carrier cell has not been configured for the terminal device, the network device may not send CRSs, that is, does not send the CRSs in all subframes of the secondary carrier cell. It should be noted that, if the secondary carrier cell is the FDD-based cell, all the subframes of the secondary carrier cell include subframes whose sequence numbers are 0, 1, 2, 3, 4, 5, 6, 7, 8, and 9. If the secondary carrier cell is the TDD-based cell, all the subframes of the secondary carrier cell include subframes whose sequence numbers are 0, 1, 3, 4, 5, 6, 7, 8, and 9.

It should be understood that step 1003 and step 1004 may be selectively performed in this embodiment. For example, only step 1003 is performed. For another example, only step 1004 is performed. For another example, both step 1003 and step 1004 are performed. This is not limited herein.

Further, when determining that the secondary carrier cell is in a third state, the network device normally sends the CRSs in all the subframes of the secondary carrier cell.

In addition, the subframe of the secondary carrier cell may further be used to send another downlink signal. To further reduce the power consumption of the network device, when the secondary carrier cell is in a different state, sending of another downlink signal may be properly reduced, which is separately described below.

In a possible implementation, if determining that the secondary carrier cell is in the second state, the network device keeps silent in all the subframes of the secondary carrier cell. For example, the network device does not send a synchronization channel (synchronization channel, SCH), a physical broadcast channel (physical broadcast channel, PBCH), a PCFICH, a PHICH, a PDCCH, a PDSCH, or the like in all the subframes.

In another possible implementation, if determining that the secondary carrier cell is in the first state, the network device does not send the PCFICH, the PHICH, the PDCCH, and the PDSCH in all the subframes of the secondary carrier cell, but normally sends the SCH and the PBCH.

In another possible implementation, if the secondary carrier cell is in the third state, the network device does not send the PHICH, a common PDCCH (which is used by all terminal devices in the secondary carrier cell), a paging message, a SIB message, and an RAR message in all the subframes of the secondary carrier cell, but normally sends the SCH, the PBCH, the PCFICH, a dedicated PDCCH (which is dedicated to some terminal devices in the secondary carrier cell), and a data signal.

In this embodiment, after the network device determines that the at least one of the N parameters of the secondary carrier cell is less than or equal to the corresponding threshold, and determines that the secondary carrier cell has been configured for the terminal device and has not been activated, the network device shuts down the at least one first OFDM symbol in the first subframe of the secondary carrier cell, where the first OFDM symbol carries the CRS corresponding to the first port and/or the second port. Because the secondary carrier cell is in the first state, the network device shuts down the CRS on the at least one OFDM symbol in the first subframe without affecting the communication performance of the terminal device. Therefore, compared with the conventional symbol shutdown technology, in embodiments of this application, more OFDM symbols can be shut down while the communication performance of the terminal device is ensured, to further reduce the power consumption of the network device.

The foregoing describes in detail the signal transmission method provided in embodiments of this application. The following describes a communication apparatus provided in embodiments of this application. In embodiments of this application, the antenna and the radio frequency circuit that have sending and receiving functions may be considered as a transceiver unit of the terminal, and the processor that has a processing function may be considered as a processing unit of the terminal. FIG. 12 is a schematic diagram of a structure of a network device according to an embodiment of this application. As shown in FIG. 12, the network device includes a transceiver unit and a processing unit 1202. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit and that is configured to implement a receiving function may be considered as a receiving unit 1201, and a component that is in the transceiver unit and that is configured to implement a sending function may be considered as a sending unit 1203. In other words, the transceiver unit includes the receiving unit 1201 and the sending unit 1203. The transceiver unit sometimes may also be referred to as a transceiver machine, a transceiver, a transceiver circuit, or the like. The receiving unit 1201 sometimes may also be referred to as a receiving machine, a receiver, a receiving circuit, or the like. The sending unit 1203 sometimes may also be referred to as a transmitting machine, a transmitter, a transmitting circuit, or the like. It should be understood that the transceiver unit is configured to perform a sending operation and a receiving operation of the network device in the embodiment shown in FIG. 2, and the processing unit 1202 is configured to perform other operations than the sending and receiving operations of the network device in the embodiment shown in FIG. 2.

Specifically, the receiving unit 1201 is configured to obtain N parameters of a target cell, where the parameters indicate a real-time status of the target cell, and N is an integer greater than or equal to 1.

The processing unit 1202 is configured to determine whether at least one of the N parameters is less than or equal to a corresponding threshold, and determine whether each terminal device in connected mode in the target cell is in a DRX sleep period or whether no terminal in connected mode exists in the target cell.

The sending unit 1203 is configured to shut down at least one first OFDM symbol in a first subframe of the target cell after determining that the at least one of the N parameters is less than or equal to the corresponding threshold, and determining that each terminal device in connected mode in the target cell is in the DRX sleep period or no terminal in connected mode exists in the target cell, where the first OFDM symbol carries a CRS corresponding to a first port and/or a second port.

In a possible implementation, a quantity of first OFDM symbols that are shut down is 4, 3, 2, or 1.

In a possible implementation, both the CRS corresponding to the first port and the CRS corresponding to the second port indicate the terminal device to measure RSRP of the target cell.

In a possible implementation, the processing unit 1202 is further configured to determine that each terminal device in connected mode in the target cell is in the DRX sleep period, where a DRX cycle of each terminal device in connected mode has same start time and same end time.

In a possible implementation, if at least three ports are configured for the target cell, the sending unit 1203 is further configured to shut down the at least one first OFDM symbol and each second OFDM symbol in the first subframe of the target cell, where each second OFDM symbol carries a CRS corresponding to a port other than the first port and the second port.

In a possible implementation, if the target cell is an FDD-based cell, a sequence number of the first subframe is 1, 2, 3, 6, 7, or 8, and the first subframe does not carry a SIB message and/or an RAR message.

In a possible implementation, if the target cell is a TDD-based cell, a sequence number of the first subframe is 3, 4, 7, 8, or 9, and the first subframe does not carry a SIB message and/or an RAR message.

In a possible implementation, if at least three ports are configured for the target cell, the sending unit 1203 is further configured to shut down each second OFDM symbol and skip shutting down the first OFDM symbol in a second subframe of the target cell after determining that the at least one parameter is less than or equal to the corresponding threshold and determining that each terminal device in connected mode in the target cell is in the discontinuous reception DRX sleep period or that no terminal in connected mode exists in the target cell.

In a possible implementation, if the target cell is an FDD-based cell, a sequence number of the second subframe is 4, 5, or 9, and the second subframe is a non-PO subframe and does not carry a SIB message and/or an RAR message.

In a possible implementation, if the target cell is an TDD-based cell, a sequence number of the second subframe is 1, 5, or 6, and the second subframe is a non-PO subframe and does not carry a SIB message and/or an RAR message.

In a possible implementation, the sending unit 1203 is further configured to send notification information to a terminal device located in a neighboring cell of the target cell, where the notification information indicates the terminal device in the neighboring cell to receive the CRS corresponding to the first port and/or the second port in a third subframe of the target cell. If the target cell is the FDD-based cell, a sequence number of the third subframe is 0, 4, 5, or 9; or if the target cell is the TDD-based cell, a sequence number of the third subframe is 0, 1, 5, or 6.

In a possible implementation, the first port is port0, and the second port is port1.

In a possible implementation, the N parameters include one or more of the following: uplink service load, downlink service load, a quantity of terminal devices, an information transmission rate, and an information transmission delay.

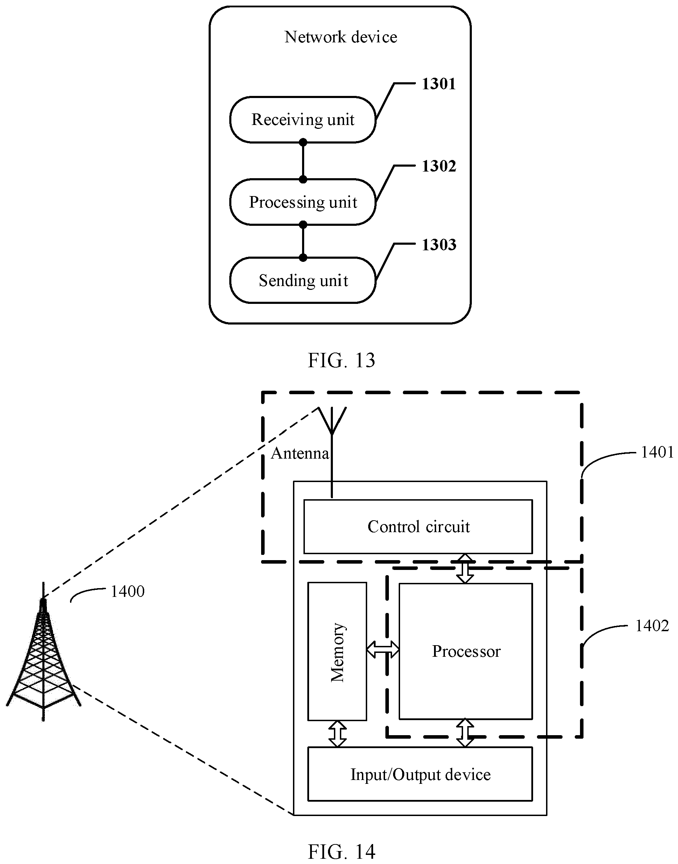

FIG. 13 is another schematic diagram of a structure of a network device according to an embodiment of this application. As shown in FIG. 13, the network device includes a transceiver unit and a processing unit 1302. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit and that is configured to implement a receiving function may be considered as a receiving unit 1301, and a component that is in the transceiver unit and that is configured to implement a sending function may be considered as a sending unit 1303. In other words, the transceiver unit includes the receiving unit 1301 and the sending unit 1303. The transceiver unit sometimes may also be referred to as a transceiver machine, a transceiver, a transceiver circuit, or the like. The receiving unit 1301 sometimes may also be referred to as a receiving machine, a receiver, a receiving circuit, or the like. The sending unit 1303 sometimes may also be referred to as a transmitting machine, a transmitter, a transmitting circuit, or the like. It should be understood that the transceiver unit is configured to perform a sending operation and a receiving operation of the network device in the embodiment shown in FIG. 2, and the processing unit 1302 is configured to perform other operations than the sending and receiving operations of the network device in the embodiment shown in FIG. 10.

Specifically, the receiving unit 1301 is configured to obtain N parameters of a secondary carrier cell, where the parameters indicate a real-time status of the secondary carrier cell, and N is an integer greater than or equal to 1.

The processing unit 1302 is configured to determine whether at least one of the N parameters is less than or equal to a corresponding threshold, and determine whether the secondary carrier cell is in a first state.

The sending unit 1303 is configured to shut down at least one first OFDM symbol in a first subframe of the secondary carrier cell after determining that the at least one of the N parameters is less than or equal to the corresponding threshold and determining that the secondary carrier cell is in the first state, where the first OFDM symbol carries a CRS corresponding to a first port and/or a second port.

In a possible implementation, a quantity of first OFDM symbols that are shut down is 4, 3, 2, or 1.

In a possible implementation, both the CRS corresponding to the first port and the CRS corresponding to the second port indicate the terminal device to measure RSRP of the secondary carrier cell.

In a possible implementation, if at least three ports are configured for the secondary carrier cell, the sending unit 1303 is further configured to shut down the at least one first OFDM symbol and each second OFDM symbol in the first subframe of the secondary carrier cell, where each second OFDM symbol carries a CRS corresponding to a port other than the first port and the second port.

In a possible implementation, if the secondary carrier cell is an FDD-based cell, a sequence number of the first subframe is 1, 2, 3, 4, 5, 6, 7, 8, or 9.

In a possible implementation, if the secondary carrier cell is a TDD-based cell, a sequence number of the first subframe is 1, 3, 4, 5, 6, 7, 8, or 9.

In a possible implementation, the sending unit 1303 is further configured to keep silent in each subframe of the secondary carrier cell if determining that the at least one parameter is less than or equal to the corresponding threshold and determining that the secondary carrier cell is in a second state.

In a possible implementation, the sending unit 1303 is further configured to skip sending a physical control format indicator channel PCFICH, a physical hybrid automatic repeat indicator channel PHICH, a physical downlink control channel PDCCH, and a physical downlink shared channel PDSCH in each subframe of the secondary carrier cell if determining that the at least one parameter is less than or equal to the corresponding threshold and determining that the secondary carrier cell is in the first state.

In a possible implementation, the sending unit 1303 is further configured to skip sending the PHICH, a common PDCCH, a paging message, a SIB message, and an RAR message in each subframe of the secondary carrier cell if determining that the at least one parameter is less than or equal to the corresponding threshold and determining that the secondary carrier cell is in a third state.

In a possible implementation, the first state is that the secondary carrier cell has been configured for the terminal device and has not been activated.

In a possible implementation, the second state is that the secondary carrier cell has not been configured for the terminal device.

In a possible implementation, the third state is that the secondary carrier cell has been configured for the terminal device and has been activated.

In a possible implementation, the first port is port0, and the second port is port1.

In a possible implementation, the N parameters include one or more of the following: uplink service load, downlink service load, a quantity of terminal devices, an information transmission rate, and an information transmission delay.

FIG. 14 is still another schematic diagram of a structure of a network device according to an embodiment of this application. As shown in FIG. 14, the network device 1400 may be used in the system shown in FIG. 1, and perform functions of the network device in the foregoing method embodiments. For ease of description, FIG. 14 shows only main components of the network device. As shown in FIG. 14, the network device 1400 includes a processor, a memory, a control circuit, an antenna, and an input/output apparatus. The processor is mainly configured to process a communication protocol and communication data, control the entire network device, execute a software program, and process data of the software program. For example, the processor is configured to support the network device in performing actions described in the foregoing method embodiments, for example, receiving a usage threshold of a wake-up signal, and determining, based on the usage threshold and an eDRX cycle, whether to listen to the wake-up signal. The memory is mainly configured to store the software program and the data, for example, store the usage threshold of the wake-up signal, and the like described in the foregoing embodiments. The control circuit is mainly configured to convert a baseband signal and a radio frequency signal and process the radio frequency signal. A combination of the control circuit and the antenna may also be referred to as a transceiver, mainly configured to send/receive a radio frequency signal in an electromagnetic wave form. The input/output apparatus such as a touchscreen, a display, or a keyboard is mainly configured to receive data input by a user and output data to the user

After the network device is powered on, the processor may read the software program in a storage unit, interpret and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, via the antenna, a radio frequency signal to outside in an electromagnetic wave form. When data is sent to the network device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 14 shows only one memory and only one processor. In an actual network device, there may be a plurality of processors and a plurality of memories. The memory may also be referred to as a storage medium, a storage device, or the like. This is not limited in this embodiment of this application.

In an optional implementation, the processor may include a baseband processor and/or a central processing unit. The baseband processor is mainly configured to process a communication protocol and communication data. The central processing unit is mainly configured to control the entire network device, execute software program, and process data of the software program. Functions of the baseband processor and the central processing unit may be integrated into the processor in FIG. 14. A person skilled in the art may understand that the baseband processor and the central processing unit each may be an independent processor, and are interconnected by using technologies such as a bus technology. A person skilled in the art may understand that the network device may include a plurality of baseband processors to adapt to different network standards, and the network device may include a plurality of central processing units to enhance processing capabilities of the network device, and components of the network device may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In this embodiment of this application, the antenna and the control circuit that have transceiver functions may be considered as a transceiver 1401 of the network device 1400, for example, configured to support the network device in performing the foregoing receiving function and sending function. A processor having a processing function is considered as a processor 1402 of the network device 1400. As shown in FIG. 14, the network device 1400 includes the transceiver 1401 and the processor 1402. The transceiver may also be referred to as a transceiver, a transceiver apparatus, or the like. Optionally, a component that is in the transceiver 1401 and that is configured to implement a receiving function may be considered as a receiving unit, and a component that is in the transceiver 1401 and that is configured to implement a sending function may be considered as a sending unit. In other words, the transceiver 1401 includes the receiving unit and the sending unit. The receiving unit may also be referred to as a receiver, an input interface, a receiving circuit, or the like. The sending unit may be referred to as a transmitting machine, a transmitter, a transmitting circuit, or the like.

The processor 1402 may be configured to execute instructions stored in the memory, to control the transceiver 1401 to receive a signal and/or send a signal, to implement functions of the network device in the foregoing method embodiments. In an implementation, it may be considered that a function of the transceiver 1401 is implemented by using a transceiver circuit or a dedicated transceiver chip.

An embodiment of this application further relates to a processor, configured to perform the method in the embodiment shown in FIG. 2 or FIG. 10.

An embodiment of this application further relates to a computer program. When executed by a processor, the program is configured to perform the method in the embodiment shown in FIG. 2 or FIG. 10.

An embodiment of this application further relates to a computer program product. The program product includes computer program code. When the program code is run by a communication unit and a processing unit or a transceiver and a processor of a communication apparatus (for example, a network device), the communication device is enabled to perform the method in the embodiment shown in FIG. 2 or FIG. 10.

An embodiment of this application further relates to a computer-readable storage medium. The computer-readable storage medium stores a computer program or instructions, and the computer program or the instructions enable a communication apparatus (for example, a network device) to perform the method in the embodiment shown in FIG. 2 or FIG. 10.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of this embodiment.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A signal transmission method, comprising:
obtaining N parameters of a target cell, wherein the parameters indicate a real-time status of the target cell, and N is an integer greater than or equal to 1; and
shutting down at least one first orthogonal frequency division multiplexing OFDM symbol in a first subframe of the target cell after determining that at least one of the N parameters is less than or equal to a corresponding threshold and determining that each terminal device in connected mode in the target cell is in a discontinuous reception DRX sleep period or that no terminal in connected mode exists in the target cell, wherein the first OFDM symbol carries a cell specific reference signal CRS corresponding to a first port and/or a second port.

2. The method according to claim 1, wherein a quantity of first OFDM symbols that are shut down is 4, 3, 2, or 1.

3. The method according to claim 1 or 2, wherein both the CRS corresponding to the first port and the CRS corresponding to the second port indicate the terminal device to measure reference signal received power RSRP of the target cell.

4. The method according to any one of claims 1 to 3, wherein the determining that each terminal device in the target cell is in a DRX sleep period comprises:
determining that each terminal device in connected mode in the target cell is in the DRX sleep period, wherein a DRX cycle of each terminal device in connected mode has same start time and same end time, or DRX cycles of different terminal devices in connected mode have different start time and/or different end time.

5. The method according to any one of claims 1 to 3, wherein if at least three ports are configured for the target cell, the shutting down at least one first OFDM symbol in a first subframe of the target cell comprises:
shutting down the at least one first OFDM symbol and each second OFDM symbol in the first subframe of the target cell, wherein each second OFDM symbol carries a CRS corresponding to a port other than the first port and the second port.

6. The method according to any one of claims 1 to 5, wherein if the target cell is a frequency division duplex FDD-based cell, a sequence number of the first subframe is 1, 2, 3, 6, 7, or 8, and the first subframe does not carry a system information block SIB message and/or a radio access response RAR message.

7. The method according to any one of claims 1 to 5, wherein if the target cell is a time division duplex TDD-based cell, a sequence number of the first subframe is 3, 4, 7, 8, or 9, and the first subframe does not carry a SIB message and/or an RAR message.

8. The method according to claim 5, wherein if the at least three ports are configured for the target cell, the method further comprises:
shutting down each second OFDM symbol and skipping shutting down the first OFDM symbol in a second subframe of the target cell after determining that the at least one parameter is less than or equal to the corresponding threshold and determining that each terminal device in connected mode in the target cell is in the discontinuous reception DRX sleep period or that no terminal in connected mode exists in the target cell.

9. The method according to claim 8, wherein if the target cell is an FDD-based cell, a sequence number of the second subframe is 4, 5, or 9, and the second subframe is a non-paging occasion PO subframe and does not carry a SIB message and/or an RAR message.

10. The method according to claim 8, wherein if the target cell is a TDD-based cell, a sequence number of the second subframe is 1, 5, or 6, and the second subframe is a non-PO subframe and does not carry a SIB message and/or an RAR message.

11. The method according to any one of claims 8 to 10, further comprising:
sending notification information to a terminal device located in a neighboring cell of the target cell, wherein the notification information indicates the terminal device in the neighboring cell to receive the CRS corresponding to the first port and/or the second port in a third subframe of the target cell; and
if the target cell is the FDD-based cell, a sequence number of the third subframe is 0, 4, 5, or 9; or
if the target cell is the TDD-based cell, the sequence number of the third subframe is 0, 1, 5, or 6.

12. The method according to any one of claims 1 to 11, wherein the first port is a protocol port port0, and the second port is port1.

13. The method according to any one of claims 1 to 12, wherein the N parameters comprise one or more of the following: uplink service load, downlink service load, a quantity of terminal devices, an information transmission rate, and an information transmission delay.

14. A signal transmission method, comprising:
obtaining N parameters of a secondary carrier cell, wherein the parameters indicate a real-time status of the secondary carrier cell, and N is an integer greater than or equal to 1; and
shutting down at least one first OFDM symbol in a first subframe of the secondary carrier cell after determining that at least one of the N parameters is less than or equal to a corresponding threshold and determining that the secondary carrier cell is in a first state, wherein the first OFDM symbol carries a CRS corresponding to a first port and/or a second port.

15. The method according to claim 14, wherein a quantity of first OFDM symbols that are shut down is 4, 3, 2, or 1.

16. The method according to claim 14 or 15, wherein both the CRS corresponding to the first port and the CRS corresponding to the second port indicate a terminal device to measure RSRP of the secondary carrier cell.

17. The method according to any one of claims 14 to 16, wherein if at least three ports are configured for the secondary carrier cell, the shutting down at least one first OFDM symbol in a first subframe of the secondary carrier cell comprises:
shutting down the at least one first OFDM symbol and each second OFDM symbol in the first subframe of the secondary carrier cell, wherein each second OFDM symbol carries a CRS corresponding to a port other than the first port and the second port.

18. The method according to any one of claims 14 to 17, wherein if the secondary carrier cell is an FDD-based cell, a sequence number of the first subframe is 1, 2, 3, 4, 5, 6, 7, 8, or 9.

19. The method according to any one of claims 14 to 17, wherein if the secondary carrier cell is a TDD-based cell, a sequence number of the first subframe is 1, 3, 4, 5, 6, 7, 8, or 9.

20. The method according to any one of claims 14 to 19, further comprising:
keeping silent in each subframe of the secondary carrier cell if determining that the at least one parameter is less than or equal to the corresponding threshold and determining that the secondary carrier cell is in the second state.

21. The method according to any one of claims 14 to 20, further comprising:
skipping sending a physical control format indicator channel PCFICH, a physical hybrid automatic repeat indicator channel PHICH, a physical downlink control channel PDCCH, and a physical downlink shared channel PDSCH in each subframe of the secondary carrier cell if determining that the at least one parameter is less than or equal to the corresponding threshold and determining that the secondary carrier cell is in the first state.

22. The method according to any one of claims 14 to 21, further comprising:
skipping sending the PHICH, a common PDCCH, a paging message, a SIB message, and an RAR message in each subframe of the secondary carrier cell if determining that the at least one parameter is less than or equal to the corresponding threshold and determining that the secondary carrier cell is in a third state.

23. The method according to any one of claims 14 to 22, wherein the first state is that the secondary carrier cell has been configured for the terminal device and has not been activated.

24. The method according to claim 20, wherein the second state is that the secondary carrier cell has not been configured for the terminal device.

25. The method according to claim 22, wherein the third state is that the secondary carrier cell has been configured for the terminal device and has been activated.

26. The method according to any one of claims 14 to 25, wherein the first port is port0, and the second port is port1.

27. The method according to any one of claims 14 to 26, wherein the N parameters comprise one or more of the following: uplink service load, downlink service load, a quantity of terminal devices, an information transmission rate, and an information transmission delay.

28. A communication apparatus, comprising:
a receiving unit, configured to obtain N parameters of a target cell, wherein the parameters indicate a real-time status of the target cell, and N is an integer greater than or equal to 1;
a processing unit, configured to determine whether at least one of the N parameters is less than or equal to a corresponding threshold, and determine whether each terminal device in connected mode in the target cell is in a discontinuous reception DRX sleep period or whether no terminal in connected mode exists in the target cell; and
a sending unit, configured to shut down at least one first OFDM symbol in a first subframe of the target cell after determining that the at least one of the N parameters is less than or equal to the corresponding threshold and determining that each terminal device in connected mode in the target cell is in the discontinuous reception DRX sleep period or that no terminal in connected mode exists in the target cell, wherein the first OFDM symbol carries a CRS corresponding to a first port and/or a second port.

29. The apparatus according to claim 28, wherein a quantity of first OFDM symbols that are shut down is 4, 3, 2, or 1.

30. The apparatus according to claim 28 or 29, wherein both the CRS corresponding to the first port and the CRS corresponding to the second port indicate the terminal device to measure reference signal received power RSRP of the target cell.

31. The apparatus according to any one of claims 28 to 30, wherein the processing unit is configured to determine that each terminal device in connected mode in the target cell is in the DRX sleep period, wherein a DRX cycle of each terminal device in connected mode has same start time and same end time, or DRX cycles of different terminal devices in connected mode have different start time and/or different end time.

32. The apparatus according to any one of claims 28 to 30, wherein if at least three ports are configured for the target cell, the sending unit is configured to shut down the at least one first OFDM symbol and each second OFDM symbol in the first subframe of the target cell, wherein each second OFDM symbol carries a CRS corresponding to a port other than the first port and the second port.

33. The apparatus according to any one of claims 28 to 32, wherein if the target cell is an FDD-based cell, a sequence number of the first subframe is 1, 2, 3, 6, 7, or 8, and the first subframe does not carry a SIB message and/or an RAR message.

34. The apparatus according to any one of claims 28 to 32, wherein if the target cell is a TDD-based cell, a sequence number of the first subframe is 3, 4, 7, 8, or 9, and the first subframe does not carry a SIB message and/or an RAR message.

35. The apparatus according to claim 32, wherein if the at least three ports are configured for the target cell, the sending unit is further configured to shut down each second OFDM symbol and skip shutting down the first OFDM symbol in a second subframe of the target cell after determining that the at least one parameter is less than or equal to the corresponding threshold and determining that each terminal device in connected mode in the target cell is in the discontinuous reception DRX sleep period or that no terminal in connected mode exists in the target cell.

36. The apparatus according to claim 35, wherein if the target cell is an FDD-based cell, a sequence number of the second subframe is 4, 5, or 9, and the second subframe is a non-paging occasion PO subframe and does not carry a SIB message and/or an RAR message.

37. The apparatus according to claim 35, wherein if the target cell is a TDD-based cell, a sequence number of the second subframe is 1, 5, or 6, and the second subframe is a non-PO subframe and does not carry a SIB message and/or an RAR message.

38. The apparatus according to any one of claims 35 to 37, wherein the sending unit is further configured to send notification information to a terminal device located in a neighboring cell of the target cell, wherein the notification information indicates the terminal device in the neighboring cell to receive the CRS corresponding to the first port and/or the second port in a third subframe of the target cell; and
if the target cell is the FDD-based cell, a sequence number of the third subframe is 0, 4, 5, or 9; or
if the target cell is the TDD-based cell, the sequence number of the third subframe is 0, 1, 5, or 6.

39. The apparatus according to any one of claims 28 to 38, wherein the first port is a protocol port port0, and the second port is port1.

40. The apparatus according to any one of claims 28 to 39, wherein the N parameters comprise one or more of the following: uplink service load, downlink service load, a quantity of terminal devices, an information transmission rate, and an information transmission delay.

41. A communication apparatus, comprising:
a receiving unit, configured to obtain N parameters of a secondary carrier cell, wherein the parameters indicate a real-time status of the secondary carrier cell, and N is an integer greater than or equal to 1;
a processing unit, configured to determine whether at least one of the N parameters is less than or equal to a corresponding threshold, and determine whether the secondary carrier cell is in a first state; and
a sending unit, configured to shut down at least one first OFDM symbol in a first subframe of the secondary carrier cell after determining that the at least one of the N parameters is less than or equal to the corresponding threshold and determining that the secondary carrier cell is in the first state, wherein the first OFDM symbol carries a CRS corresponding to a first port and/or a second port.

42. The apparatus according to claim 41, wherein a quantity of first OFDM symbols that are shut down is 4, 3, 2, or 1.

43. The apparatus according to claim 41 or 42, wherein both the CRS corresponding to the first port and the CRS corresponding to the second port indicate the terminal device to measure RSRP of the secondary carrier cell.

44. The apparatus according to any one of claims 41 to 43, wherein if at least three ports are configured for the secondary carrier cell, the sending unit is configured to shut down the at least one first OFDM symbol and each second OFDM symbol in the first subframe of the secondary carrier cell, wherein each second OFDM symbol carries a CRS corresponding to a port other than the first port and the second port.

45. The apparatus according to any one of claims 41 to 44, wherein if the secondary carrier cell is an FDD-based cell, a sequence number of the first subframe is 1, 2, 3, 4, 5, 6, 7, 8, or 9.

46. The apparatus according to any one of claims 41 to 44, wherein if the secondary carrier cell is a TDD-based cell, a sequence number of the first subframe is 1, 3, 4, 5, 6, 7, 8, or 9.

47. The apparatus according to any one of claims 41 to 46, wherein the sending unit is further configured to keep silent in each subframe of the secondary carrier cell if determining that the at least one parameter is less than or equal to the corresponding threshold and determining that the secondary carrier cell is in the second state.

48. The apparatus according to any one of claims 41 to 47, wherein the sending unit is further configured to skip sending a PCFICH, a PHICH, a PDCCH, and a PDSCH in each subframe of the secondary carrier cell if determining that the at least one parameter is less than or equal to the corresponding threshold and determining that the secondary carrier cell is in the first state.

49. The apparatus according to any one of claims 41 to 48, wherein the sending unit is further configured to skip sending the PHICH, a common PDCCH, a paging message, a SIB message, and an RAR message in each subframe of the secondary carrier cell if determining that the at least one parameter is less than or equal to the corresponding threshold and determining that the secondary carrier cell is in a third state.

50. The apparatus according to any one of claims 41 to 49, wherein the first state is that the secondary carrier cell has been configured for the terminal device and has not been activated.

51. The apparatus according to claim 47, wherein the second state is that the secondary carrier cell has not been configured for the terminal device.

52. The apparatus according to claim 49, wherein the third state is that the secondary carrier cell has been configured for the terminal device and has been activated.

53. The apparatus according to any one of claims 41 to 52, wherein the first port is port0, and the second port is port1.

54. The apparatus according to any one of claims 41 to 53, wherein the N parameters comprise one or more of the following: uplink service load, downlink service load, a quantity of terminal devices, an information transmission rate, and an information transmission delay.

55. A communication apparatus, comprising a memory, a processor, and a computer program that is stored in the memory and that is executable on the processor, wherein when executing the computer program, the processor implements the method according to any one of claims 1 to 13.

56. A communication apparatus, comprising a memory, a processor, and a computer program that is stored in the memory and that is executable on the processor, wherein when executing the computer program, the processor implements the method according to any one of claims 14 to 27.

57. A chip, comprising a processor and an interface, wherein the processor is coupled to a memory through the interface, the processor is configured to execute a computer program or code in the memory, and when the computer program or the code is executed, the method according to any one of claims 1 to 13 or claims 14 to 27 is performed.

58. A computer-readable storage medium, wherein when instructions are run on a computer apparatus, the computer apparatus is enabled to perform the method according to any one of claims 1 to 13 or claims 14 to 27.

59. A computer program product, wherein the computer program product stores instructions, and when the instructions are executed by a computer, the computer is enabled to perform the method according to any one of claims 1 to 13 or claims 14 to 27.
